(19) Europäisches Patentamt
European Patent Office
Office européen des brevets

(11) **EP 2 753 897 B1**

(12) **EUROPÄISCHE PATENTSCHRIFT**

(45) Veröffentlichungstag und Bekanntmachung des Hinweises auf die Patenterteilung:
**04.09.2024 Patentblatt 2024/36**

(21) Anmeldenummer: **13762052.2**

(22) Anmeldetag: **25.07.2013**

(51) Internationale Patentklassifikation (IPC):
**G01B 21/04** (2006.01)   **G01B 21/20** (2006.01)
**G06T 17/30** (2006.01)

(52) Gemeinsame Patentklassifikation (CPC):
**G01B 21/047; G01B 21/20; G06T 17/30**

(86) Internationale Anmeldenummer:
**PCT/DE2013/200076**

(87) Internationale Veröffentlichungsnummer:
**WO 2014/032661 (06.03.2014 Gazette 2014/10)**

(54) **VERFAHREN UND VORRICHTUNG ZUM ERKENNEN VON ABWEICHUNGEN EINER OBERFLÄCHE EINES OBJEKTS**

METHOD AND DEVICE FOR DETECTING DEVIATIONS OF AN OBJECT SURFACE

PROCÉDÉ ET DISPOSITIF DE DÉTECTION D'ÉCARTS D'UNE SURFACE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2012 DE 102012215195**
**28.08.2012 DE 102012215215**

(43) Veröffentlichungstag der Anmeldung:
**16.07.2014 Patentblatt 2014/29**

(73) Patentinhaber: **INB Vision GmbH**
**39118 Magdeburg (DE)**

(72) Erfinder:
• **MICHAELIS, Bernd**
**verstorben (DE)**
• **LILIENBLUM, Tilo**
**39120 Magdeburg (DE)**
• **VON ENZBERG, Sebastian**
**39104 Magdeburg (DE)**

(74) Vertreter: **Ullrich & Naumann PartG mbB**
**Schneidmühlstrasse 21**
**69115 Heidelberg (DE)**

(56) Entgegenhaltungen:
**EP-A2- 0 921 374    FR-A1- 2 916 529**

• **LI Y ET AL: "Free-form surface inspection techniques state of the art review", COMPUTER AIDED DESIGN, ELSEVIER PUBLISHERS BV., BARKING, GB, vol. 36, no. 13, 1 November 2004 (2004-11-01), pages 1395 - 1417, XP004534040, ISSN: 0010-4485, DOI: 10.1016/J.CAD.2004.02.009**

EP 2 753 897 B1

**Beschreibung**

Die Erfindung betrifft ein Verfahren gemäß Anspruch 1 zum Erkennen von Abweichungen einer Oberfläche eines Objektes anhand eines Vergleichs von Messdaten der Oberfläche und vorgegebenen Referenzdaten.

Die Erfindung betrifft ebenfalls eine Vorrichtung gemäß Anspruch 11 zum Erkennen von Abweichungen einer Oberfläche eines Objektes anhand eines Vergleichs von Messdaten der Oberfläche und vorgegebenen Referenzdaten, insbesondere geeignet zur Durchführung eines Verfahrens gemäß einem der Ansprüche 1 bis 10.

Der Begriff "Oberfläche" ist im weitesten Sinne zu verstehen und umfasst neben planen Flächen auch dreidimensionale Oberflächen, bspw. geformte Oberflächen und Oberflächen mit Texturen.

Abweichungen einer Oberfläche, auch Oberflächenfehler genannt, sind kleine lokale Formabweichungen wie bspw. Dellen, Einbeulungen, Kratzer, Risse oder Einfallstellen. Diese sind besonders bei lackierten oder glänzenden Oberflächen sichtbar und wirken sich nachteilig bei der Beurteilung der Oberflächenqualität, bspw. von Karosserie- und Interieurteilen in der Automobilindustrie, Außenhäuten in der Luftfahrtindustrie, Oberflächen von Elektrogeräten, etc. aus. Die Erkennung von kleinen lokalen Formabweichungen ist besonders schwierig auf Oberflächen von flexiblen Bauteilen aus Materialien wie bspw. Blech oder Plastik. So ist es bspw. möglich, dass aufgrund der Verformbarkeit oder durch Variabilität im Fertigungsprozess eine hohe Formtoleranz des Bauteils und damit der Oberfläche zulässig sein kann, die wesentlich größer ist als die zu erkennenden Oberflächenfehler.

Um Oberflächenfehler zu erkennen, sind aus der DE 10 2004 058 778 A1, der DE 43 21 042 C1, der DE 20 2005 011 807 U1 oder der DE 10 2007 037 812 A1 Prüfanordnungen bekannt geworden, die eine geeignete Beleuchtungsanordnung, eine Kamera zur Aufnahme eines Bildes des Bauteils und eine Auswerteeinrichtung zur Auswertung des aufgenommen zweidimensionalen Bildes umfassen. Nachteilig bei den genannten Verfahren ist jedoch, dass die damit erhaltenen Messergebnisse sehr stark abhängig von der Beleuchtungs- und Kameraanordnung relativ zur Oberfläche des Bauteils sind, d.h. es ist ein sehr hoher Einrichtungsaufwand erforderlich. Darüber hinaus eignen sich die bekannten Verfahren nur für große, relativ flache Oberflächen mit geringer Krümmung, wobei die Oberflächen weiterhin konvex sein müssen.

Weiterhin ist es im Stand der Technik bekannt geworden, bspw. aus der DE 40 23 368 A1, der DE 39 38 714, der EP 2 019 283 A2 oder der DE 199 25 462 C1, eine dreidimensionale Erfassung der Oberfläche des Bauteils vorzunehmen. Damit können jedoch lediglich Formabweichungen mit großer Ausdehnung oder Abweichungen zu den theoretischen Konstruktionsdaten erkannt werden. In der DE 10 2011 113 138 A1 wird die Auswertung von 3D-Daten mit einem Konkavfilter vorgeschlagen, um lokale Fehlstellen zu erkennen. Dieses bekannte Verfahren liefert jedoch ausschließlich auf ausgewählten Geometrien verwertbare Ergebnisse.

Darüber hinaus ist weiterhin vorgeschlagen worden, wie bspw. in der DE 197 53 620 C1, der EP 0 921 374 B1 oder der EP 1 211 479 B1, eine Differenz zwischen dreidimensionalen Messdaten der Oberfläche des Bauteils zu einem vorgegebenen fehlerfreien Referenzbauteil zu bilden. Zwar können damit lokale Formabweichungen ermittelt werden, wenn die zulässige großflächige Formtoleranz durch das Referenzbauteil abgebildet ist, das Referenzbauteil ist jedoch mit Hilfe eines künstlichen neuronalen Netzes ermittelt worden, welches zuvor mit fehlerfreien Referenzdaten trainiert wurde. Nachteilig dabei ist, dass aufgrund des künstlichen neuronalen Netzes eine extrem große Datenmenge für das Modell des Referenzteils entsteht: So führt dies bspw. bei einer Menge von 50.000 Oberflächenpunkten zu 2,5 $* 10^9$ Gewichten, was bei einer angenommenen double-Genauigkeit zu einer Datenmenge von fast 20 GB führen würde. Wenn lediglich Teilflächen der gesamten Oberfläche des Objektes vermessen werden, wird zwar die Datenmenge verkleinert, allerdings führt dies zu Klaffungen an den jeweiligen Übergangsbereichen, so dass diese Übergangsbereiche nicht sinnvoll ausgewertet werden können. Schließlich ist ein weiterer Nachteil, dass eine Fehlerdetektion an einem globalen Koordinatensystem ausgerichtet ist und kleine lokale Krümmungen der Oberfläche nicht berücksichtigt werden.

Aus der FR 2 916 529 ist ein Messverfahren zur Bestimmung des Umrisses eines hergestellten Teils bekannt geworden. Aus der Nicht-Patentliteratur "Free-form surface inspection techniques state of the art review" von Yadong Li und Peihua Gu sind verschiedene Verfahren zur Erkennung von Oberflächenfehlern bekannt geworden.

Der vorliegenden Erfindung liegt nun die Aufgabe zugrunde, ein Verfahren und eine Vorrichtung zur Erkennung von Abweichungen einer Oberfläche eines Objektes anhand eines Vergleichs von Messdaten der Oberfläche und vorgegebenen Referenzdaten anzugeben, welche ressourcenschonender sind und gleichzeitig auch kleine Abweichungen der Oberfläche des Objektes zuverlässig erkennen. Darüber hinaus ist es eine Aufgabe der vorliegenden Erfindung ein Verfahren und eine Vorrichtung zum Erkennen von Abweichungen einer Oberfläche eines Objektes anzugeben, welche einfach und kostengünstig durchführbar bzw. im Aufbau ist.

Die vorstehenden Aufgaben werden durch die Merkmale der Patentansprüche 1 und 11 gelöst.

Neuartig an der vorliegenden Erfindung ist unter anderem die Erstellung eines Soll-Oberflächenmodells in Form einer zumindest abschnittsweisen parametrischen Beschreibung der Oberfläche aus den vorgegebenen Referenzdaten. Der Begriff "parametrische Oberflächenbeschreibung" ist im Sinne der Erfindung dergestalt zu verstehen, dass diese eine mathematische Beschreibung darstellt, die zumindest abschnittsweise stetig ist und bei der eine beliebige dreidimensionale Position auf der Oberfläche des Objektes durch einen Satz von üblicherweise zwei, gegebenenfalls auch mehr Parametern exakt definiert ist.

Vorteil hierbei ist unter anderem, dass anstatt sämtliche Referenzdaten für das Soll-Oberflächenmodell heranzuziehen, lediglich Kenngrößen herangezogen werden, die eine Beschreibung der Oberfläche des Objektes ermöglichen. Auf diese Weise ist eine Verarbeitung einer wesentlich größeren effektiven Fläche für die Beschreibung der Oberfläche des Objektes möglich. Ein weiterer Vorteil ist, dass damit Bogenlängen, Krümmungen, etc. der Oberfläche im Soll-Oberflächenmodell sehr einfach zu ermitteln sind. Dies erlaubt bspw. eine gezieltere Verteilung von Punkten für den Vergleich zwischen Messdaten und Soll-Oberflächenmodelle unter Einbeziehung der lokalen Oberflächenform und damit insbesondere in Bereichen mit starker Krümmung eine genauere Erkennung von Abweichungen. Durch die zumindest abschnittsweise parametrischen Beschreibungen der Oberfläche lassen sich weiterhin zusätzliche Rand- und Übergangsbedingungen höherer Ordnung vorgeben, d.h., dass bspw. neben der Bedingung für die Gleichheit von Werten für Randpunkte auch Forderungen hinsichtlich der Neigung (erste Ableitung) und/oder Krümmung (zweite Ableitung) oder auch an höhere Ableitungen gestellt werden können. Auf diese Weise wird die Verarbeitung von sehr großen, aus verschiedenen Oberflächenbereichen zusammengesetzten Oberflächen vereinfacht, da Klaffungen, Unregelmäßigkeiten, etc. auf diese Weise verhindert werden.

Weitere Merkmale, Vorteile und Vorzüge der Ausführungsform sind in den abhängigen Ansprüchen beschrieben.

In einer vorteilhaften Ausgestaltung der Erfindung erfolgt die parametrische Beschreibung der Oberfläche in Form einer Spline-Oberflächenbeschreibung. Damit ist eine besonders einfache Zusammensetzung einer Gesamtoberfläche, welche aus mehreren Teiloberflächen besteht, aus Spline-Basisfunktion gewichtet mit Spline-Koeffizienten möglich.

Weiterhin denkbar ist die Beschreibung der Oberfläche in Form einer Spline-Oberfläche, insbesondere einer hierarchischen, Tensorprodukt-B-Spline-Oberfläche. Aufgrund einer solchen Oberflächenbeschreibung ist ein besonders einfacher späterer Vergleich mit den Messdaten möglich.

Weiterhin denkbar ist eine Beschreibung der Oberfläche in Form einer orthogonalen Reihenentwicklung wie z.B. der Fourier- oder Wavelet-Zerlegung. Die Gesamtoberfläche wird auch hier durch eine Summe von Basisfunktionen (z.B. Sinus, Cosinus oder Wavelets), gewichtet mit Koeffizienten, beschrieben.

Werden die Messdaten taktil, optisch und/oder mittels Schall, insbesondere Ultraschall und/oder Radar ermittelt, kann zum einen auf bereits bekannte Verfahren bzw. Vorrichtungen zumindest teilweise zurückgegriffen werden, was die Durchführung des Verfahrens einfach und kostengünstig macht. Werden die Messdaten mittels eines optischen, photogrammetrischen Verfahrens, insbesondere in Form eines Zeitkorrelations- und/oder Phasenshiftverfahrens ermittelt, können großflächige, dichte Messdaten mit hoher Tiefenauflösung erzeugt werden.

Um die Messdaten zuverlässig zu ermitteln, werden die Messdaten anhand einer Projektion einer vorbestimmten Musterfolge, insbesondere einer Sinusmusterfolge, auf die Oberfläche des Objekts projiziert und anschließend die projizierte Musterfolge optisch erfasst.

Die Messdaten können auch bspw. mit Hilfe deflektometrischer Verfahren, also Verfahren, die aus einem Spiegelbild der Oberfläche des Objektes Krümmungsdaten und/oder dreidimensionale Daten berechnen, Wärmebildverfahren, Verfahren mit ein-, zwei- oder dreidimensionalen Daten, die mit Hilfe von Zeilenkameras oder dreidimensionalen Zeilenscannern gewonnen werden und/oder Verfahren mit zweidimensionalen Bildern aus Matrixkameras verwendet werden. Die genannten Verfahren können dabei nicht nur für die Messdaten im Sinne der Erfindung verwendet werden, sondern ebenfalls zur Erzeugung von realen, vorgegebenen Referenzdaten durch Messungen am realen Objekt.

Das Soll-Oberflächenmodell kann mittels eines neuronalen Netzes erstellt werden, welches mit einer Mehrzahl von verschiedenen Datensätzen von Referenzdaten trainiert wird. Mittels des neuronalen Netzes können auch komplexe Oberflächenformen des Objektes vermessen werden und auch kleine Oberflächenfehler erkannt werden, wenn die Datensätze der Referenzdaten fehlerfreie Referenzobjekte repräsentieren.

Besonders vorteilhaft ist es, wenn aus den Messdaten eine zumindest abschnittsweise parametrische Beschreibung der Oberfläche als Ist-Oberflächenmodell erstellt wird und der Vergleich durch Modellvergleich des Soll-Oberflächenmodells und des Ist-Oberflächenmodells durchgeführt wird. Auf diese Weise lassen sich Abweichungen mittels des Vergleichs noch einfacher und zuverlässiger ermitteln.

Um den Vergleich zuverlässig durchzuführen, ist es weiter vorteilhaft, dass der Vergleich anhand eines orthogonalen Abstandes zwischen der zumindest abschnittsweise parametrischen Beschreibung der Oberfläche und zumindest einem Messpunkt der Messdaten durchgeführt wird.

Weiterhin kann das Soll-Oberflächenmodell anhand statistischer Verfahren aus den vorgegebenen Referenzdaten ermittelt werden. Vorteil hierbei ist wiederum, dass damit noch genauer das Soll-Oberflächenmodell ermittelt werden kann, was das Erkennen von Abweichungen anhand des Vergleichs noch weiter verbessert.

In einigen Fällen, z.B. bei Oberflächen mit örtlich begrenzten komplexen Strukturen, ist eine separate Betrachtung von Teilbereichen sinnvoll. Hierzu kann das erfindungsgemäße Verfahren einfach oder mehrfach rekursiv auf die Vergleichsergebnisse in einem kleinen Teilbereich angewendet werden. Ein Teil der Daten, der aus dem Vergleich der Messdaten mit dem Soll-Oberflächenmodell resultiert, dient als Eingangsdaten für den Vergleich mit einem weiteren, auf einer kleineren Teilfläche definierten Oberflächenmodell. Es ergibt sich somit ein mehrstufiges Auswerteverfahren mit mehreren Soll-Oberflächenmodellen, die auf jeder Stufe jeweils einen oder mehrere kleinere Teilbereiche der Objektoberfläche charakterisieren.

Vorteilhafterweise werden die vorgegebenen Referenzdaten und/oder die Messdaten vor Erstellung der zumindest abschnittsweisen parametrischen Beschreibung der Oberfläche mittels zumindest eines Filterverfahrens gefiltert. Mittels des Filterverfahrens ist bspw. eine Glättung der vorgegebenen Referenzdaten und/oder der Messdaten möglich. Daneben ist ebenfalls eine so genannte Randbehandlung, Maskierung oder Ausrichtung der vorgegebenen Referenzdaten und/oder der Messdaten möglich.

Besonders vorteilhaft ist es, wenn die vorgegebenen Referenzdaten und die Messdaten und/oder aus dem Vergleich berechnete Differenzdaten zwischen den Messdaten und dem Soll-Oberflächenmodell mittels des gleichen Filterverfahrens gefiltert werden. Dadurch wird bspw. beim Vergleich und bei der späteren Analyse der Differenzdaten, insbesondere in Form von Abstandsdaten, vermieden, dass Artefakte durch Anwendung verschiedener Filterverfahren als Abweichungen der Oberfläche erkannt werden.

Um ausreichend vorgegebene Referenzdaten zur Verfügung stellen zu können, ist es vorteilhaft, die vorgegebenen Referenzdaten zumindest teilweise künstlich zu erzeugen, insbesondere mittels Simulation und/oder mittels Interpolation von gemessenen Referenzdaten. Hierzu kann eine physikalische Simulation von Verformungen, bspw. mittels finiten Elementen vorgenommen werden, um die vorgegebenen Referenzdaten künstlich zu erzeugen. Physikalische Effekte wie Materialausdehnung durch Temperaturänderung, Durchbiegung durch Gravitation und/oder zusätzliche Kräfte, die durch Fixierungen, Haltevorrichtung oder ähnlichem in das Objekt eingebracht werden, können mittels entsprechenden Modellvorgaben simuliert werden. Werden die freien Modellparameter des vorgegebenen Modells variiert, können unterschiedliche aber ähnliche, fehlerfreie Objektdaten als vorgegebene Referenzdaten erzeugt werden. Die Modellparameter können dabei auch von tatsächlichen realen Gegebenheiten abweichen. Darüber hinaus können auch vereinfachte, physikalische Verformungsmodelle zur Erzeugung von künstlichen Referenzdaten, bspw. einfache Feder-Masse-Modelle, verwendet werden. Hierzu können gemessene Referenzdaten und theoretische aus einer CAD-Simulation erhaltene Referenzdaten von mindestens zwei unterschiedlichen Objekten verwendet werden, deren Oberfläche respektive Eigenschaften und deren Position zueinander bekannt ist. Auf diese Weise können nun Federn zwischen korrespondierenden Massepunkten der beiden Oberflächen der Objekte gespannt werden, deren Schwingungsverhalten dann weitere vorgegebene Referenzdaten liefert. Weiterhin können zusätzliche Referenzdaten auch aus fehlerhaften Teilen erzeugt werden, auf denen Fehlstellen mit Hilfe von anderen bekannten Verfahren erkannt und korrigiert werden.

So können z.B. bekannte Bereiche, in denen Serienfehler mit schwankender Ausprägung auftreten, bei der Einrichtung durch eine sogenannte Area of Interest (AOI) markiert und z.B. mit einem Konkavfilter (vgl. DE 10 2011 113 138 A1) verarbeitet werden. Die durch das andere Verfahren ermittelte Abweichung von der Oberflächenform innerhalb der AOI kann von dem Datensatz abgezogen und als Referenzdatensatz genutzt werden.

Weiterhin ist es möglich, die durch die AOI ausgeschnittenen Fehlstellen aus den Daten anderer Teile zu rekonstruieren. Hierzu wird bei der Karhunen-Loewe-Transformation der durch die AOI ausgeschnittene Bereich zunächst nicht berücksichtigt, jedoch bei der inversen Karhunen-Loewe-Transformation wieder mit rekonstruiert.

Umfassen die Mittel zum Erfassen zumindest eine Kamera und eine Beleuchtungseinheit, insbesondere wobei die Beleuchtungseinheit ausgebildet ist, eine strukturierte Beleuchtung der Oberfläche bereitzustellen, können die Messdaten und damit ggf. auch entsprechende Abweichungen, äußerst zuverlässig ermittelt werden.

Umfassen die Mittel zum Erfassen einen Zeilensensor, kann die Oberfläche mittels Scannen einfach und schnell abgetastet werden und so entsprechende Messdaten erhalten werden. Daneben können nicht nur die Messdaten, sondern ebenfalls auch entsprechende Referenzdaten mittels des scannenden Verfahrens mit vorgenannter Beleuchtungseinheit und Zeilensensor erhalten werden.

Um noch genauer den Vergleich und damit Abweichungen einer Oberfläche erkennen zu können, kann für den Vergleich ein an die Messdaten angepasstes Soll-Oberflächenmodell erstellt und verwendet werden. Ein angepasstes Soll-Oberflächenmodell kann beispielsweise dadurch erhalten werden, indem zunächst lediglich aus den Referenzdaten ein Oberflächenmodell generiert wird. Anschließend werden Kennzahlen und/oder -größen ermittelt. Auf diese werden dann die Messdaten projiziert, so dass ein angepasstes Soll-Oberflächenmodell erhalten wird. Weiter kann eine Anpassung des Soll-Oberflächenmodells auch durch Vorgabe von Bedingungen speziell an Rand- und Übergangsbereiche von bzw. zwischen verschiedenen Abschnitten der parametrischen Oberflächenbeschreibung erzielt werden. So können beispielsweise Rand- und Übergangsbedingungen höherer Ordnung vorgegeben werden, d.h., dass bspw. neben der Bedingung für die Gleichheit von Werten für Randpunkte auch Forderungen hinsichtlich der Neigung (erste Ableitung) und/oder Krümmung (zweite Ableitung) oder auch an höhere Ableitungen gestellt werden können. Auf diese Weise wird die Verarbeitung von sehr großen, aus verschiedenen Oberflächenbereichen zusammengesetzten Oberflächen vereinfacht, da Klaffungen, Unregelmäßigkeiten, etc. auf diese Weise verhindert werden.

Es gibt nun verschiedene Möglichkeiten, die Lehre der vorliegenden Erfindung in vorteilhafter Weise auszugestalten und weiterzubilden. Dazu ist einerseits auf die von den Patentansprüchen 1 und 11 abhängigen Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

In der Zeichnung zeigen

Fig. 1   in einer schematischen Ansicht, teilweise, ein Ausführungsbeispiel der grundsätzlichen Anordnung einer erfindungsgemäßen Vorrichtung, die das erfindungsgemäße Verfahren nutzt,

Fig. 2   ein Ablaufdiagramm, teilweise, eines Ausführungsbeispiel eines erfindungsgemäßen Verfahrens zum Erhalt eines Soll-Oberflächenmodells,

Fig. 3   ein Ablaufdiagramm, teilweise, eines Ausführungsbeispiels eines erfindungsgemäßen Verfahrens, für einen Vergleich, sowie

Fig. 4   in einer schematischen Ansicht, teilweise, ein Ausführungsbeispiel eines erfindungsgemäßen Verfahrens, wobei dort eine Abweichung der Oberfläche dargestellt ist.

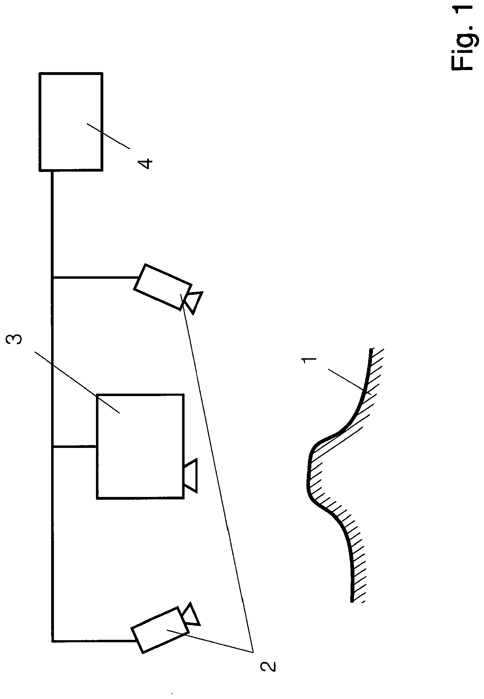

Fig. 1 zeigt in einer schematischen Ansicht, teilweise, ein Ausführungsbeispiel der grundsätzlichen Anordnung einer erfindungsgemäßen Vorrichtung, die das erfindungsgemäße Verfahren nutzt.

In Fig. 1 ist mit Bezugszeichen 1 eine zu messende Oberfläche eines Objektes gezeigt. Weiterhin sind zwei Kameras 2 sowie ein Projektor 3 zwischen den beiden Kameras 2 angeordnet. Sowohl die Kameras 2 als auch der Projektor 3 sind mit einer Verarbeitungs- und Steuereinheit 4 zur Steuerung der Kameras und des Projektors verbunden. Um die Oberfläche 1 zu vermessen, projiziert der Projektor 3 ein sinusförmiges Streifenmuster auf die Oberfläche 1, das in gewissen zeitlichen Schritten um eine bestimmte Phasendifferenz verschoben wird. Die Oberfläche 1 wird mit jedem projizierten Muster von den Kameras 2 aufgenommen, so dass jeweils eine Bildfolge mit einer bestimmten zeitlichen Grauwertfolge entsteht. Die Kameras 2 übertragen die aufgenommenen Bilder an die Verarbeitungs- und Steuerungseinheit 4, so dass die Verarbeitungs- und Steuerungseinheit 4 daraus korrespondierende Bildpunkte in den Kameras finden kann, welche bei bekannter Kameraanordnung bzw. -position, bspw. durch Triangulation, zu eindeutigen dreidimensionalen Messpunkten der Oberfläche 1 des Objektes führen.

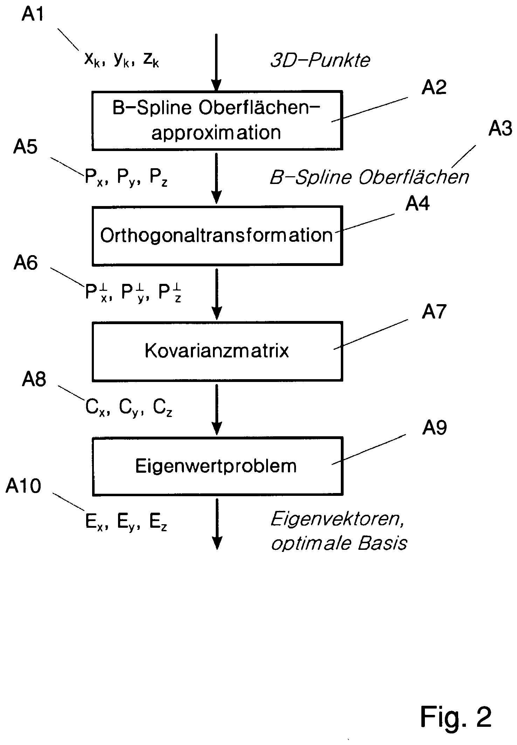

Fig. 2 zeigt ein Ablaufdiagramm, teilweise, eines Ausführungsbeispiels eines erfindungsgemäßen Verfahrens zum Erhalt eines Soll-Oberflächenmodells.

In Fig. 2 werden Eingangswerte A1 für das "Training" eines neuronalen Netzes zum Erhalt des Soll-Oberflächenmodells in Form von dreidimensionalen Punkten eingegeben. In einem ersten Schritt A2 werden aus den Referenzdaten A1 eine B-Spline-Oberflächenbeschreibung berechnet. Hierzu können verschiedene bekannte Verfahren verwendet werden. Weiterhin können die Anzahl von Kontrollpunkten und ein Aufbau von Knotenvektoren für alle Referenzdaten konstant sein und kann insbesondere aus einem Computer Aided Design Modell der Oberfläche 1 des Objektes ermittelt werden. Werden Tensorprodukt B-Spline-Oberflächen für die Oberflächenbeschreibung verwendet, führt dies bspw. zu einer Oberflächenbeschreibung in Form von

$$\mathbf{s}(u,v) = \begin{bmatrix} x(u,v) \\ y(u,v) \\ z(u,v) \end{bmatrix} = \sum_{i=1}^{n} \sum_{j=1}^{m} \mathbf{p}_{ij} b_i^k(u) b_j^l(v)$$

wobei die Basisfunktion $b_i^k$ (u) und $b_j^l$ (v) konstant für sämtliche Referenzdatensätze sein können und die Kontrollpunkte $p_{i,j}$ bzw. resultierende Kontrollpunktmatrizen A5 bezeichnend für die Oberfläche 1 sind.

In einem zweiten Schritt A4 werden die B-Spline-Basisfunktionen nach dem Gram-Schmidt-Verfahren orthogonalisiert, welches eine statistische Auswertung der Datensätze von Referenzdaten vereinfacht. Dabei lässt sich eine Orthogonalisierung einfach als lineare Transformation der Kontrollpunktmatrizen A5 in orthogonalisierte Matrizen A6 mit zwei Transformationen beschreiben:

$$\mathbf{P}_z^i = \left( \Lambda_u^T \right)^{-1} \mathbf{P}_x \left( \Lambda_v \right)^{-1}$$

Eine statistische Auswertung aller Referenzdatensätze erfolgt dabei über Kovarianzmatrizen A8, welche in einem dritten Schritt A7 aus den orthogonalisierten Kontrollpunktmatrizen A5 der Referenzdatensätze ermittelt werden:

$$\mathbf{C}_x = \sum_k \mathbf{p}^{\perp}_{x,k} \left( \mathbf{p}^{\perp}_{x,k} \right)^T$$

Um eine optimale Basis für die Beschreibung der in den Referenzdaten vorliegenden Oberfläche 1 zu erhalten, löst man für die Kovarianzmatrizen A8 das folgende Eigenwertproblem in einem vierten Schritt A9:

$$\mathbf{C}_x \mathbf{e}_{x,i} = \lambda_{x,i} \mathbf{e}_{x,i}$$

Auf diese Weise erhält man Eigenvektoren $e_{x,i}$ und Matrizen $E_x$ von Eigenvektoren A10, welche eine optimale Basis darstellen. Dabei sind nur wenige, insbesondere zwischen 10 und 20, Basisfunktionen ausreichend, um eine ähnliche Oberfläche zu beschreiben anstatt sämtlicher B-Spline-Basisfunktionen.

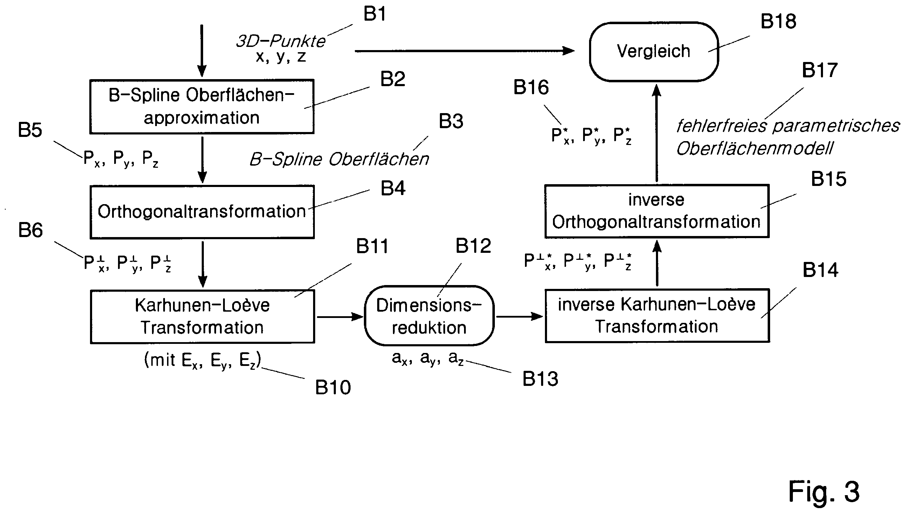

Fig. 3 zeigt ein Ablaufdiagramm, teilweise, eines Ausführungsbeispiels eines erfindungsgemäßen Verfahrens, für einen Vergleich.

In Fig. 3 werden nun zunächst analoge Schritte wie in Fig. 2 mit den Messdaten B1 durchgeführt. Hierbei entsprechen die Schritte B2 und B4 den Schritten A2 und A4 der Fig. 2. Die orthogonalisierten Matrizen B6 werden in einem weiteren Schritt B11 auf die Eigenvektoren der optimalen Basis des Soll-Oberflächenmodells, bezeichnet mit Bezugszeichen A10, projiziert:

$$\mathbf{a}_x = \mathbf{E}_x \mathbf{p}^{\perp}_x$$

was als Karhunen-Loève-Transformation KLT bekannt ist. In einem weiteren Schritt B12 werden nur erste, signifikante Koeffizienten, bezeichnet mit Bezugszeichen B13 ausgewählt. Auf diese Weise sind untypische, d.h. nicht in den Referenzdatensätzen enthaltene Variationen der Oberfläche, wie z.B. Oberflächendefekte oder Messwertrauschen nicht mehr in der Oberflächenbeschreibung enthalten. Eine Erzeugung der Soll-Oberflächenform liegt im Wesentlichen in einer Reduktion der Dimension gemäß Schritt B12 im KLT transformierten Bereich.

Um ein Vergleichsmodell basierend auf den Messdaten B1 für die Soll-Oberflächenform zu erhalten, wird nun in einem weiteren Schritt B14 eine inverse KLT Transformation gemäß

$$\mathbf{p}^{\perp,*}_x = \mathbf{E}_x^{\ T} \mathbf{a}_x$$

durchgeführt ebenso wie in einem weiteren Schritt B15 eine inverse Orthogonaltransformation gemäß

$$\mathbf{P}^*_x = \mathbf{\Lambda}_u^{\ T} \left( \mathbf{P}^{\perp,*}_x \right) \mathbf{\Lambda}_v$$

Damit erhält man gefilterte Kontrollpunkte B16, die die Soll-Oberflächenform, angepasst an die Messdaten B1 beschreiben. Das so erhaltene fehlerfreie parametrische Oberflächenmodell B17 in Form einer B-Spline-Oberfläche kann nun in einem weiteren Schritt mit den gemessenen dreidimensionalen Punkten B1 der Oberfläche mittels eines Vergleichs zum Erkennen von Abweichungen genutzt werden.

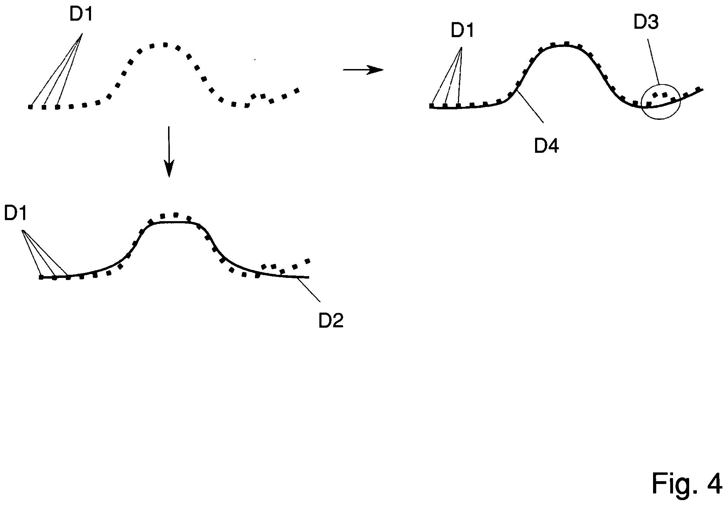

Fig. 4 zeigt in einer schematischen Ansicht, teilweise, ein Ausführungsbeispiel eines erfindungsgemäßen Verfahrens, wobei dort die Abweichung der Oberfläche dargestellt ist.

In Fig. 4 links oben sind Messdaten, bspw. dreidimensionale Punkte D1, welche den dreidimensionalen Messdaten B1 in Fig. 3 entsprechen, gezeigt. In Fig. 4 rechts oben ist eine angepasste Soll-Oberfläche D4 zusammen mit den Messdaten D1 gezeigt. Im rechten Bereich ist eine Abweichung D3 von der Soll-Oberflächenform D4 gezeigt. Links unten in Fig. 4 ist ein entsprechender Vergleich mit einem allgemeinen bspw. aus Konstruktionsdaten erhaltenen theoretischen Computer-Aided Design-Modell D2 gezeigt. Bestimmt man nun den Abstand der Messdaten D1 von der Soll-Oberflächenform D4 können auf diese Weise Oberflächendefekte als lokale Abweichungen D3 ermittelt werden. Das CAD-Modell D2 erlaubt im Gegensatz zum erfindungsgemäßen Verfahren, insbesondere im gezeigten Ausführungsbeispiel der Fig. 1-4 kein Erkennen des Oberflächenfehlers D3.

Zusammenfassend ist festzuhalten, dass die Erfindung eine Vorrichtung und ein Verfahren betrifft, wonach durch eine parametrische Oberflächenbeschreibung, insbesondere in Form von Spline-Beschreibungen, zuverlässig, einfach und genau so wie ressourcenschonend Abweichungen bzw. Oberflächendefekte von Oberflächen von Objekten ermittelt werden können. Eingesetzt werden kann die Erfindung insbesondere in Bereichen, in denen die Notwendigkeit besteht, große Oberflächen mit hoher Genauigkeit in Form zu erfassen. Insbesondere eignet sich die Erfindung zur Anwendung im Bereich der Oberflächenprüftechnik.

Hinsichtlich weiterer vorteilhafter Ausgestaltungen der erfindungsgemäßen Lehre sei zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

So ist es bspw. möglich, die parametrische Oberflächenbeschreibung auch als T-Spline-Oberfläche oder Spline-Oberfläche mit möglichen T-Kreuzungen von Kontrollpunkten vorzusehen. Ebenso ist eine parametrische Oberflächenbeschreibung aus einer impliziten Oberflächenbeschreibung auf Basis von beispielsweise Kegelschnitten oder allgemein Quadriken im mehrdimensionalen Raum ableitbar. Sämtliche Spline-Oberflächen können dabei auch auf einem gleichen Knotenraster basieren.

Die Messdaten können als ungeordnete, dreidimensionale Punktewolke vorliegen und/oder mit regelmäßigem oder unregelmäßigem bekannten Raster. Daneben können Eingangsdaten und/oder die Messdaten zur Ermittlung des Soll-Oberflächenmodells und/oder des Vergleichs- oder Ist-Oberflächenmodells als eine Menge von 3- 4- oder m-Eck-Facetten oder im STL-Format vorliegen. Das Soll-Oberflächenmodell kann dabei aus den Basisfunktionen für die Karhunen-Loève-Transformation der Sätze von Referenzdaten zusammengesetzt werden. Ebenso kann das neuronale Netz als autoassoziatives neuronales Netz ausgeführt sein. Für das "Training" des neuronalen Netzes können die Kenngrößen der parametrischen Oberflächenbeschreibung, insbesondere nach geeigneter Vorverarbeitung verwendet werden. Die Vorverarbeitung kann dabei in Form einer Orthogonalisierung der Spline-Funktionen ausgeführt werden. Die Sätze von Referenzdaten können weiter teilweise oder komplett Daten umfassen, welche aus vorhandenen Messungen und/oder Computer Aided Design Daten stammen bzw. auf diesen basieren. Schließlich ist es möglich, das Soll-Oberflächenmodell durch eine oder mehrere Nebenbedingungen einzuschränken, die nicht durch die Sätze von Referenzdaten gegeben sind.

**Bezugszeichenliste**

| | |
|---|---|
| 1 | Oberfläche |
| 2 | Kamera |
| 3 | Projektor |
| 4 | Verarbeitungs- und Steuereinheit |
| A1, B1 | Dreidimensionale Punkte |
| A2, B2 | B-Spline-Oberflächenapproximation |
| A3, B3 | B-Spline-Oberflächen |
| A4, B4 | Orthogonaltransformation |
| A5, B5 | Kontrollpunktmatrizen |
| A6, B6 | Orthogonalisierte Matrizen |
| A7 | Ermitteln der Kovarianzmatrix |
| A8 | Kovarianzmatrix |
| A9 | Eigenwertproblem |
| A10 | Eigenvektoren |
| B11 | Karhunen-Loève Transformation |
| B12 | Dimensionsreduktion |
| B13 | Signifikante Koeffizienten |
| B14 | Inverse Karhunen-Loève Transformation |
| B15 | Inverse Orthogonaltransformation |
| B16 | Gefilterte Kontrollpunkte |
| B17 | Fehlerfreies parametrisches Oberflächenmodell |
| B18 | Vergleich |
| D1 | Messpunkte |
| D2 | Allgemeines CAD-Modell |
| D3 | Lokale Abweichung |

D4        Soll-Oberflächenbeschreibung

**Patentansprüche**

1. Verfahren zum Erkennen von lokalen Formabweichungen (D3) einer Oberfläche (1) eines Objektes anhand eines Vergleichs von Messdaten (D1) der Oberfläche (1) und vorgegebenen Referenzdaten (A1) wobei mittels der vorgegebenen Referenzdaten (A1) eine zumindest abschnittsweise parametrische Beschreibung der Oberfläche (1) als Soll-Oberflächenmodell (D4) erstellt wird und der Vergleich mittels des Soll-Oberflächenmodells (D4) und der Messdaten (D1) durchgeführt wird, wobei das Soll-Oberflächenmodell (D4) anhand statistischer Verfahren aus den vorgegebenen Referenzdaten (A1) ermittelt wird mit einer Mehrzahl von verschiedenen Datensätzen von Referenzdaten (A1) und wobei die vorgegebenen Referenzdaten (A1) und ggf. die Messdaten (D1) vor Erstellung der zumindest abschnittsweisen parametrischen Beschreibung der Oberfläche gefiltert werden und wobei die vorgegebenen Referenzdaten (A1) und die Messdaten (D1) und/oder aus dem Vergleich berechnete Differenzdaten zwischen den Messdaten (D1) und dem Soll-Oberflächenmodell (D4) mittels des gleichen Filterverfahrens gefiltert werden.

2. Verfahren nach Anspruch 1, **dadurch gekennzeichnet, dass** die parametrische Beschreibung der Oberfläche (1) in Form einer Spline-Oberflächenbeschreibung erfolgt.

3. Verfahren nach Anspruch 2, **dadurch gekennzeichnet, dass** als Spline-Oberflächenbeschreibung eine, insbesondere hierarchische, Tensorprodukt-B-Spline-Oberfläche verwendet wird.

4. Verfahren nach einem der Ansprüche 1 bis 3, **dadurch gekennzeichnet, dass** die Messdaten (D1) taktil, optisch und/oder mittels Schall, insbesondere Ultraschall und/oder Radar ermittelt werden.

5. Verfahren nach einem der Ansprüche 1 bis 4, **dadurch gekennzeichnet, dass** die Messdaten (D1) mittels eines optischen photogrammetrischen Verfahrens, insbesondere in Form eines Zeitkorrelations- und/oder Phasenshift-Verfahrens, ermittelt werden.

6. Verfahren nach Anspruch 5, **dadurch gekennzeichnet, dass** die Messdaten (D1) anhand einer Projektion einer vorbestimmten Musterfolge, insbesondere eine Sinusmusterfolge, auf die Oberfläche (1) und anschließender optischer Erfassung der projizierten Musterfolge ermittelt werden.

7. Verfahren nach einem der Ansprüche 1 bis 6, **dadurch gekennzeichnet, dass** das Soll-Oberflächenmodell (D4) mittels eines neuronalen Netzes erstellt wird, welches mit der Mehrzahl von verschiedenen Datensätzen von Referenzdaten (A1) trainiert wird, wobei aus den Messdaten (D1) eine zumindest abschnittsweise parametrische Beschreibung der Oberfläche als Ist-Oberflächenmodell erstellt wird und der Vergleich durch Modellvergleich des Soll-Oberflächenmodells (D4) und des Ist-Oberflächenmodells durchgeführt wird.

8. Verfahren nach einem der Ansprüche 1 bis 7, **dadurch gekennzeichnet, dass** der Vergleich anhand eines orthogonalen Abstandes zwischen der zumindest abschnittsweise parametrischen Beschreibung der Oberfläche (1) und zumindest einem Messpunkt der Messdaten (D1) durchgeführt wird.

9. Verfahren nach einem der Ansprüche 1 bis 8, **dadurch gekennzeichnet, dass** für den Vergleich ein an die Messdaten (D1) angepasstes Soll-Oberflächenmodell (D4) erstellt und verwendet wird.

10. Verfahren nach einem der Ansprüche 1 bis 9, **dadurch gekennzeichnet, dass** die vorgegebenen Referenzdaten (A1) zumindest teilweise künstlich erzeugt werden, insbesondere mittels Simulation und/oder mittels Interpolation von gemessenen Referenzdaten.

11. Vorrichtung zum Erkennen von lokalen Formabweichungen (D3) einer Oberfläche eines Objektes anhand eines Vergleichs von Messdaten (D1) der Oberfläche und vorgegebenen Referenzdaten (A1), insbesondere geeignet zur Durchführung eines Verfahrens gemäß einem der Ansprüche 1 bis 10, umfassend Mittel (2, 3) zum Erfassen der Messdaten (D1) und der Referenzdaten (A1), eine Verarbeitungseinheit (4) zumindest zur Durchführung des Vergleichs, wobei die Verarbeitungseinheit (4) ausgebildet ist, mittels der vorgegebenen Referenzdaten (A1) eine zumindest abschnittsweise parametrische Beschreibung der Oberfläche (1) als Soll-Oberflächenmodell (D4) zu erstellen und den Vergleich mittels des Soll-Oberflächenmodells (D4) und der Messdaten (A1) durchzuführen, wobei das Soll-Oberflächenmodell (D4) anhand statistischer Verfahren aus den vorgegebenen Referenzdaten (A1) ermittelt wird mit einer Mehrzahl von verschiedenen Datensätzen von Referenzdaten (A1) und wobei die vorgegebenen Referenzdaten (A1) und ggf. die Messdaten (D1) vor Erstellung der zumindest abschnittsweisen parametrischen Beschreibung der Oberfläche gefiltert werden und wobei die vorgegebenen Referenzdaten (A1) und die Messdaten (D1) und/oder aus dem Vergleich berechnete Differenzdaten zwischen den Messdaten (D1) und dem Soll-Oberflächenmodell (D4) mittels des gleichen Filterverfahrens gefiltert werden.

12. Vorrichtung gemäß Anspruch 11, **dadurch gekennzeichnet, dass** die Mittel (2, 3) zum Erfassen zumindest eine Kamera (2) und eine Beleuchtungseinheit (3) umfassen, insbesondere wobei die Beleuchtungseinheit (3) ausgebildet ist, eine strukturierte Beleuchtung der Oberfläche (1) bereitzustellen.

13. Vorrichtung gemäß Anspruch 11 oder 12, **dadurch gekennzeichnet, dass** die Mittel (2, 3) zum Erfassen einen Zeilensensor umfassen.

## Claims

1. Method for identifying local shape deviations (D3) of a surface (1) of an object on the basis of a comparison of measurement data (D1) of the surface (1) and predetermined reference data (A1), wherein by means of the predetermined reference data (A1) an at least partially parametric description of the surface (1) is produced as a desired surface model (D4) and the comparison is carried out by means of the desired surface model (D4) and the measurement data (D1), wherein the desired surface model (D4) is established using statistical methods from the predetermined reference data (A1) with a plurality of different data sets of reference data (A1) and wherein the predetermined reference data (A1) and where applicable the measurement data (D1) are filtered before the at least partially parametric description of the surface is produced and wherein the predetermined reference data (A1) and the measurement data (D1) and/or differential data calculated from the comparison between the measurement data (D1) and the desired surface model (D4) are filtered using the same filter method.

2. Method according to claim 1, **characterised in that** the parametric description of the surface (1) is carried out in the form of a spline surface description.

3. Method according to claim 2, **characterised in that** an in particular hierarchical tensor product B spline surface is used as the spline surface description.

4. Method according to any one of claims 1 to 3, **characterised in that** the measurement data (D1) are established in a tactile manner, optically and/or by means of sound, in particular ultrasound and/or radar.

5. Method according to any one of claims 1 to 4, **characterised in that** the measurement data (D1) are established by means of an optical photogrammetric method, in particular in the form of a time correlation and/or phase shift method.

6. Method according to claim 5, **characterised in that** the measurement data (D1) are established by means of a projection of a predetermined pattern sequence, in particular a sine pattern sequence, onto the surface (1) and subsequent optical detection of the projected pattern sequence.

7. Method according to any one of claims 1 to 6, **characterised in that** the desired surface model (D4) is produced by means of a neuronal network which is trained with the plurality of different data sets of reference data (A1), wherein, from the measurement data (D1) an at least partially parametric description of the surface is produced as the surface model and the comparison is carried out by means of model comparison of the desired surface model (D4) and the actual surface model.

8. Method according to any one of claims 1 to 7, **characterised in that** the comparison is carried out with reference to an orthogonal spacing between the at least partial parametric description of the surface (1) and at least one measurement point of the measurement data (D1).

9. Method according to any one of claims 1 to 8, **characterised in that** for the comparison a desired surface model (D4) which is adapted to the measurement data (D1) is produced and used.

**10.** Method according to any one of claims 1 to 9, **characterised in that** the predetermined reference data (A1) are produced at least partially in an artificial manner, in particular by means of simulation and/or by means of interpolation of measured reference data.

**11.** Apparatus for identifying local shape deviations (D3) of a surface of an object on the basis of a comparison of measurement data (D1) of the surface and predetermined reference data (A1), in particular suitable for carrying out a method according to any one of claims 1 to 10, comprising means (2, 3) for detecting the measurement data (D1) and the reference data (A1), a processing unit (4) at least for carrying out the comparison, wherein the processing unit (4) is constructed by means of the predetermined reference data (A1) to produce an at least partially parametric description of the surface (1) as a desired surface model (D4) and to carry out the comparison by means of the desired surface model (D4) and the measurement data (A1), wherein the desired surface model (D4) is established using statistical methods from the predetermined reference data (A1) with a plurality of different data sets of reference data (A1) and wherein the predetermined reference data (A1) and where applicable the measurement data (D1) are filtered prior to the production of the at least partially parametric description of the surface, and wherein the predetermined reference data (A1) and the measurement data (D1) and/or differential data calculated from the comparison between the measurement data (D1) and the desired surface model (D4) are filtered using the same filter method.

**12.** Apparatus according to claim 11, **characterised in that** the means (2, 3) for detection comprise at least one camera (2) and an illumination unit (3), in particular wherein the illumination unit (3) is constructed to provide a structured illumination of the surface (1).

**13.** Apparatus according to claim 11 or 12, **characterised in that** the means (2, 3) for detection comprise a line sensor.

**Revendications**

**1.** Procédé de détection de défauts de formes locaux (D3) d'une surface (1) d'un objet à l'aide d'une comparaison de données de mesure (D1) de la surface (1) et de données de référence prédéterminées (A1), dans lequel, au moyen des données de référence prédéterminées (A1), une description paramétrique au moins partielle de la surface (1) est générée en tant que modèle de surface de consigne (D4) et la comparaison est effectuée au moyen du modèle de surface de consigne (D4) et des données de mesure (D1), dans lequel le modèle de surface de consigne (D4) est déterminé à l'aide de procédés statistiques à partir des données de référence prédéterminées (A1) et avec une pluralité de jeux de données différents de données de référence (A1) et dans lequel les données de référence prédéterminées (A1) et, le cas échéant, les données de mesure (D1) sont filtrées avant la création de la description paramétrique au moins partielle de la surface et dans lequel les données de référence prédéterminées (A1) et les données de mesure (D1) et/ou les données différentielles calculées à partir de la comparaison entre les données de mesure (D1) et le modèle de surface de consigne (D4) sont filtrées au moyen du même procédé de filtrage.

**2.** Procédé selon la revendication 1, **caractérisé en ce que** la description paramétrique de la surface (1) a lieu sous la forme d'une description de surface par spline.

**3.** Procédé selon la revendication 2, **caractérisé en ce qu'**une surface de spline B à produit de tenseur, plus particulièrement hiérarchique, est utilisée comme description de surface par spline.

**4.** Procédé selon l'une des revendications 1 à 3, **caractérisé en ce que** les données de mesure (D1) sont déterminées de manière tactile, optique et/ou par ondes sonores, plus particulièrement à l'aide d'ultrasons et/ou d'ondes radar.

**5.** Procédé selon l'une des revendications 1 à 4, **caractérisé en ce que** les données de mesure (D1) sont déterminées au moyen d'un procédé optique photogrammétrique, plus particulièrement sous la forme d'un procédé de corrélation dans le temps et/ou à décalage de phase.

**6.** Procédé selon la revendication 5, **caractérisé en ce que** les données de mesure (D1) sont déterminées à l'aide d'une suite de motifs prédéterminée, plus particulièrement une suite de motifs sinusoïdaux, sur la surface (1) puis d'une détection optique de la suite de motifs projetée.

**7.** Procédé selon l'une des revendications 1 à 6, **caractérisé en ce que** le modèle de surface de consigne (D4) est généré au moyen d'un réseau neuronal, qui est formé avec la pluralité de jeux de données différents de données (A1), dans lequel, à partir des données de mesure (D1), une description paramétrique au moins partielle de la surface est générée en tant que modèle de surface réel et la comparaison est effectuée à l'aide d'une comparaison de modèles entre le modèle de surface de consigne (D4) et le modèle de surface réel.

8. Procédé selon l'une des revendications 1 à 7, **caractérisé en ce que** la comparaison est effectuée à l'aide d'une distance orthogonale entre la description paramétrique au moins partielle de la surface (1) et au moins un point de mesure des données de mesure (D1).

9. Procédé selon l'une des revendications 1 à 8, **caractérisé en ce que**, pour la comparaison, on génère et on utilise un modèle de surface de consigne (D4) adapté aux données de mesure (D1).

10. Procédé selon l'une des revendications 1 à 9, **caractérisé en ce que** les données de référence prédéterminées (A1) sont générées au moins partiellement de manière artificielle, plus particulièrement au moyen d'une simulation et/ou au moyen d'une interpolation de données de référence mesurées.

11. Dispositif pour la détection de défauts de forme locaux (D3) d'une surface d'un objet à l'aide d'une comparaison de données de mesure (D1) de la surface et de données de référence prédéterminées (A1), plus particulièrement conçu pour l'exécution d'un procédé selon l'une des revendications 1 à 10, comprenant des moyens (2, 3) pour la mesure des données de mesure (D1) et des données de référence (A1), une unité de traitement (4) au moins pour l'exécution de la comparaison, dans lequel l'unité de traitement (4) est conçue pour générer, au moyen des données de référence prédéterminées (A1), une description paramétrique au moins partielle de la surface (1) en tant que modèle de surface de consigne (D4) et pour exécuter la comparaison au moyen du modèle de surface de consigne (D4) et des données de mesure (A1), dans lequel le modèle de surface de consigne (D4) est déterminé à l'aide de procédés statistiques à partir des données de référence prédéterminées (A1) et avec une pluralité de jeux de données différents de données de référence (A1) et dans lequel les données de référence prédéterminées (A1) et, le cas échéant, les données de mesure (D1) sont filtrées avant la création de la description paramétrique au moins partielle de la surface et dans lequel les données de référence prédéterminées (A1) et les données de mesure (D1) et/ou les données différentielles calculées à partir de la comparaison entre les données de mesure (D1) et le modèle de surface de consigne (D4) sont filtrées au moyen du même procédé de filtrage.

12. Dispositif selon la revendication 11, **caractérisé en ce que** les moyens (2, 3) comprennent, pour la mesure, au moins une caméra (2) et une unité d'éclairage (3), plus particulièrement dans lequel l'unité d'éclairage (3) est conçue pour mettre à disposition un éclairage structuré de la surface (1).

13. Dispositif selon la revendication 11 ou 12, **caractérisé en ce que** les moyens (2, 3) comprennent, pour la mesure, un capteur de ligne.

EP 2 753 897 B1

Fig. 1

$x_k$, $y_k$, $z_k$    3D-Punkte

A1

A2    B-Spline Oberflächen-approximation

A5    $P_x$, $P_y$, $P_z$

A3    B-Spline Oberflächen

A4    Orthogonaltransformation

A6    $P_x^\perp$, $P_y^\perp$, $P_z^\perp$

A7    Kovarianzmatrix

A8    $C_x$, $C_y$, $C_z$

A9    Eigenwertproblem

A10    $E_x$, $E_y$, $E_z$    Eigenvektoren, optimale Basis

Fig. 2

B1
*3D-Punkte*
x, y, z

B18
Vergleich

B2
B-Spline Oberflächen-approximation

B16
$P^*_x$, $P^*_y$, $P^*_z$

B17
*fehlerfreies parametrisches Oberflächenmodell*

B5
$P_x$, $P_y$, $P_z$

B3
*B-Spline Oberflächen*

B4
Orthogonaltransformation

B15
inverse Orthogonaltransformation

B6
$P^\perp_x$, $P^\perp_y$, $P^\perp_z$

B11
Karhunen-Loève Transformation

B12
Dimensions-reduktion

$P^{\perp*}_x$, $P^{\perp*}_y$, $P^{\perp*}_z$

B14
inverse Karhunen-Loève Transformation

(mit $E_x$, $E_y$, $E_z$)

B10

$a_x$, $a_y$, $a_z$

B13

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004058778 A1
- DE 4321042 C1
- DE 202005011807 U1
- DE 102007037812 A1
- DE 4023368 A1
- DE 3938714
- EP 2019283 A2
- DE 19925462 C1
- DE 102011113138 A1
- DE 19753620 C1
- EP 0921374 B1
- EP 1211479 B1
- FR 2916529